# EUROPEAN PATENT SPECIFICATION

(11) **EP 3 291 082 B1**
(45) Date of publication and mention of the grant of the patent: **09.10.2019**
(21) Application number: 16203526.5
(22) Date of filing: 12.12.2016
(51) Int. Cl.: G06F 9/38

(54) **METHOD AND DEVICE FOR DETERMINING BRANCH HISTORY FOR BRANCH PREDICTION**
VERFAHREN UND VORRICHTUNG ZUR BESTIMMUNG DER VERZWEIGUNGSGESCHICHTE ZUR VERZWEIGUNGSVORHERSAGE
PROCÉDÉ ET DISPOSITIF DE DÉTERMINATION D'HISTORIQUE D'EMBRANCHEMENT POUR PRÉDICTION D'EMBRANCHEMENT

(30) Priority: 30.08.2016 US 201615252168; 09.09.2016 WO PCT/US2016/051040
(43) Date of publication of application: 07.03.2018
(73) Proprietor: Advanced Micro Devices, Inc., Santa Clara, CA 95054 (US)
(72) Inventor: HAVLIR, Steven, Austin, TX Texas 78735 (US)
(74) Representative: Eve, Rosemary Margaret

(56) References cited:
- US-A1- 2008 256 347
- US-A1- 2009 164 766
- US-A1- 2009 198 984
- US-A1- 2015 032 997
- US-A1- 2015 309 794
- US-A1- 2015 331 691

## Description

### BACKGROUND

In computer architecture, a branch predictor is a digital circuit that tries to guess which way a branch, such as an if-then-else structure in a program or code, will go before this is known for sure. A branch predictor implements a method of branch prediction. Branch prediction improves the flow in an instruction pipeline and plays a role in achieving high effective performance in many microprocessor architectures.

Branch prediction is based on branch history, that is, a record of how often a given branch is taken and not taken. In a global branch history, the branch histories of multiple branches are stored in one set of bits.

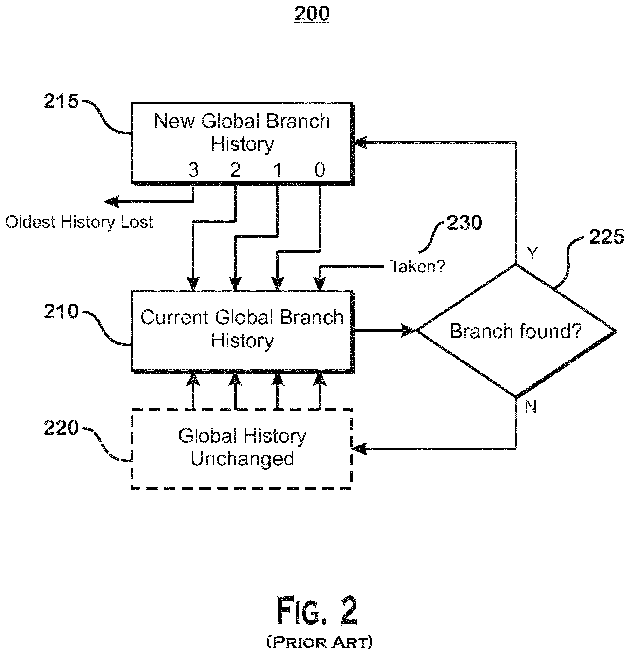

FIG. 2 shows a traditional type of processing device and method used to update a global branch history. Circuitry determines whether or not a branch has been found (step 225). When a branch has not been found, a current global history is unchanged (step 220). When a branch is found, the current global branch history is shifted by one bit (step 215; shown as a left shift) and the oldest history bit (bit 3) is lost. The rightmost bit in the current global branch history is replaced by a bit indicating whether or not the branch has been taken (step 230) - for example, a 0 for not taken and a 1 for taken. In this manner, the current global branch history is updated. The current branch history is used in a branch predictor to predict whether a branch will be taken or not taken in the future.

US 2009/0198984 discloses a system and method for updating a global history prediction record in a microprocessor system using pipeline instruction processing.

US 2015/0331691 discloses branch prediction based on generating a first index from a previous instruction address and from a first branch history vector having a first length.

US 2008/0256347 discloses a method, system and computer program for maintaining a path history register of register indirect branches.

US 2009/0164766 discloses a system and method for efficient improvement of branch prediction in a microprocessor with negligible impact on die-area, power consumption and clock cycle period.

US 2015/0309794 discloses a method and system for branch prediction.

US 2015/0032997 discloses tracking global history vector in high performance out of order superscalar processors, which may comprise providing a shift register storing global history vector that stores branch predictions and outcomes.

### BRIEF DESCRIPTION OF THE DRAWINGS

A more detailed understanding may be had from the following description, given by way of example in conjunction with the accompanying drawings wherein:
FIG. 1 is a block diagram of an example device in which one or more disclosed aspects may be implemented;
FIG. 2 shows a processing device configured to update a global branch history;
FIG. 3 shows another processing device configured to update a global branch history;
FIG. 4 shows another processing device configured to update a global branch history;
FIG. 5 shows a method for determining and updating a global branch history; and
FIG. 6 shows another method for determining and updating a global branch history.

### DETAILED DESCRIPTION

In contrast to traditional global branch history methods and devices, such as previously described, the disclosed method and device improves timing and avoids loss of previous branch predictor training when a new branch is discovered. The disclosed method and device also provide benefit of being able to differentiate between identical taken/not taken (T/NT) patterns at different code locations. If the computer code being executed contains discovered NT branches, the disclosed method and device is able to track longer sequences than traditional global history updating methods and devices.

The method includes shifting first bits of a branch signature into a current global branch history and performing a bitwise exclusive-or (XOR) function on second bits of the branch signature and shifted bits of the current global branch history. The second bits are distinct from the first bits. The branch signature includes bits that identify a particular branch whose branch history is being updated. The shifting includes discarding one or more of the oldest bits in the current global branch history. The shifting and the performing of the bitwise XOR function are executed when a branch identified by the branch signature is taken. The current global branch history is not changed when a branch identified by the branch signature is not taken.

In an implementation, the method also includes shifting one or more newest bits in the current global branch history by a first number of places, shifting one or more oldest bits in the current global branch history by a second number of places different from the first number of places, and performing a bitwise XOR function between bits shifted by the second number of places and newer bits in the current global branch history. These parts of the method are executed when a branch identified by the branch signature is taken, and the current global branch history does not change when a branch identified by the branch signature is not taken. For example, the second number of places is less than the first number of places (e.g., the first number of places is three and the second number of places is one).

In an implementation, the method is implemented such that the updated current global branch history is included in a first level of a two-level adaptive predictor.

In an implementation, the processing device, configured to determine and update global branch history for branch prediction, includes shift logic configured to shift bits representing a current global branch history, a register configured to store the current global branch history, decision circuitry configured to determine whether or not a branch is taken, and a first plurality of exclusive-or (XOR) gates.

In an implementation, the determining and updating of global branch history include the shift logic shifting bits representing a current global branch history and storing one or more of the shifted bits in the register, the register receiving and storing first bits of a branch signature, the first plurality of XOR gates performing a bitwise XOR function on second bits of the branch signature and shifted bits of the current global branch history, and storing a result of the bitwise XOR function in the register.

In an implementation, the processing device is configured to determine and update global branch history when the decision circuitry determines that a branch identified by the branch signature has been taken. In an implementation, the processing device is configured to not change the current global branch history when the decision circuitry determines that a branch identified by the branch signature is not taken.

In an implementation the processing device is further configured to execute compression of branch history information and branch signature information. In this implementation the processing device is configured to shift one or more of the newest bits in the current global branch history by a first number of places, and shift one or more of the oldest bits in the current global branch history by a second number of places different from the first number of places. The processing device further includes a second plurality of XOR gates configured to perform a bitwise XOR function between bits shifted by the second number of places and newer bits in the current global branch history. This implementation of the processing device is also configured to execute compression of branch history information and branch signature information when the decision circuitry determines that a branch identified by the branch signature has been taken. The processing device does not change the current global branch history when the decision circuitry determines that a branch identified by the branch signature is not taken.

In a particular implementation of the processing device configured to execute compression, the second number of places may be less than the first number of places. The first number of places may be three and the second number of places may be one. Another particular implementation may include multiple levels of compression. As one example, newer bits in the current global branch history may be shifted by three places, older bits by two places, and still older bits by one place. For effective compression, the amount of shifting tends to decrease as the historical age of the bit increases.

The processing device includes a two-level adaptive predictor apparatus configured to receive the updated current global branch history in a first level.

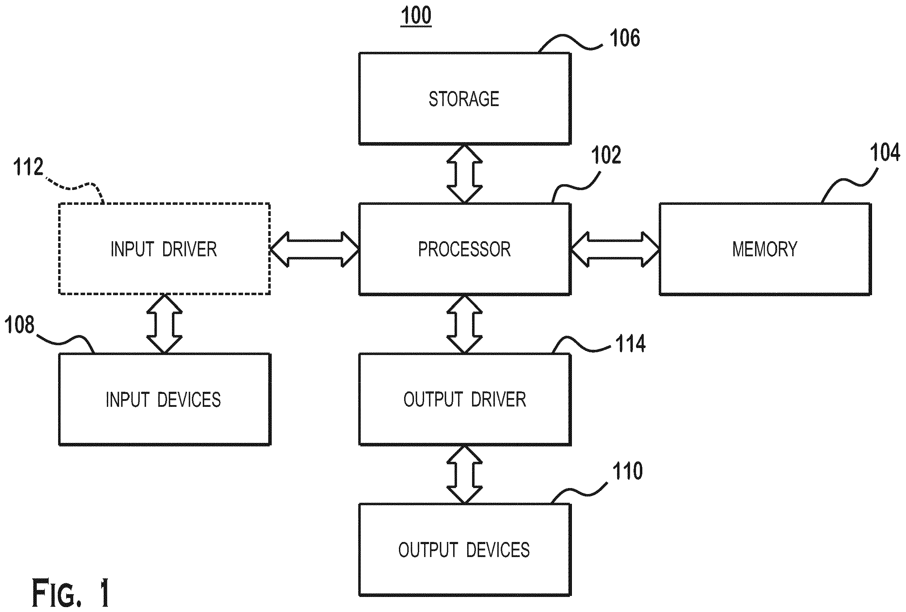

Figure 1 is a block diagram of an example device 100 in which one or more disclosed embodiments are implemented. Examples of the device 100 include a computer, a gaming device, a handheld device, a set-top box, a television, a mobile phone, or a tablet computer. The device 100 includes a processor 102, a memory 104, a storage 106, one or more input devices 108, and one or more output devices 110. Optionally, the device 100 includes an input driver 112 and an output driver 114. It is understood that the device 100 may include additional components not shown in Figure 1.

The processor 102 includes a central processing unit (CPU), a graphics processing unit (GPU), a CPU and GPU located on the same die, or one or more processor cores, wherein each processor core may be a CPU or a GPU. The memory 104 is located on the same die as the processor 102, or the memory 104 is located separately from the processor 102. The memory 104 includes a volatile or nonvolatile memory, for example, random access memory (RAM), dynamic RAM, or a cache.

The storage 106 includes a fixed or removable storage, for example, a hard disk drive, a solid state drive, an optical disk, or a flash drive. The input devices 108 include a keyboard, a keypad, a touch screen, a touch pad, a detector, a microphone, an accelerometer, a gyroscope, a biometric scanner, or a network connection (e.g., a wireless local area network card for transmission and/or reception of wireless IEEE 802 signals). The output devices 110 include a display, a speaker, a printer, a haptic feedback device, one or more lights, an antenna, or a network connection (e.g., a wireless local area network card for transmission and/or reception of wireless IEEE 802 signals).

The input driver 112 communicates with the processor 102 and the input devices 108, and permits the processor 102 to receive input from the input devices 108. The output driver 114 communicates with the processor 102 and the output devices 110, and permits the processor 102 to send output to the output devices 110. It is noted that the input driver 112 and the output driver 114 are optional components, and that the device 100 will operate in the same manner if the input driver 112 and the output driver 114 are not present.

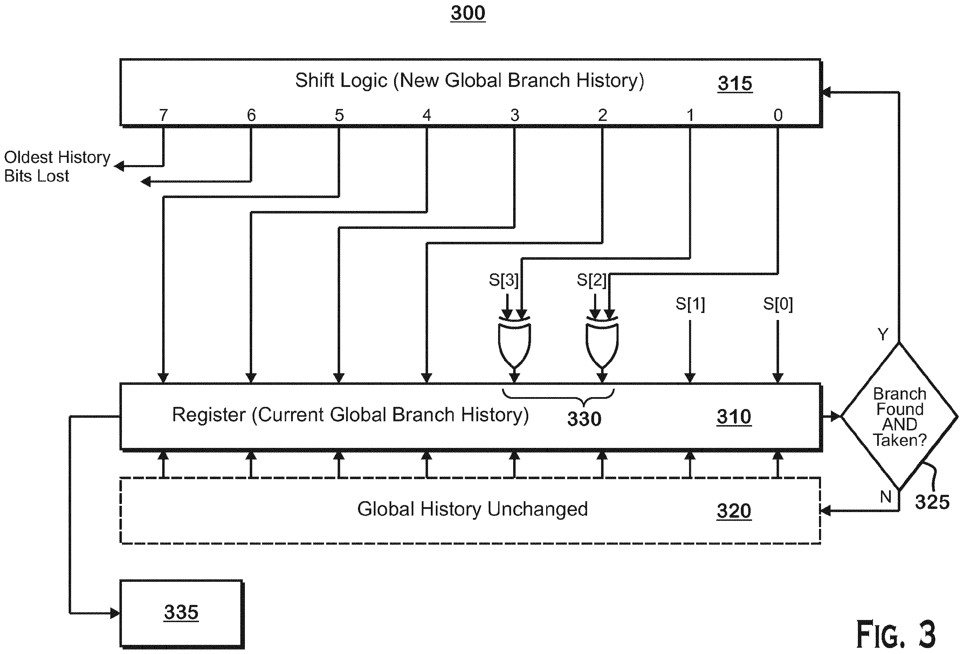

FIG. 3 shows an example implementation of an electronic processing device 300 configured to determine and update global branch history for branch prediction. Specifics of electronic processing device 300 such as exact numbers of bits are not to be considered as limiting.

A current global branch history is stored as a bit sequence in a register 310. In FIG. 3, the current global branch history is shown as having eight bits, but this number is not to be considered limiting. When a branch is found, a determination is made by decision circuitry 325 whether the branch has been taken or not taken. If the branch has not been taken, the current global history is not changed 320 and is re-stored in register 310. If the branch has been taken, the current global branch history is updated, as in the following example, which is not to be considered limiting.

The updating begins with shift logic 315 shifting bits representing a current global branch history, and storing the shifted bits in register 310. As shown in FIG. 3, for example, bits 0 through 5 are shifted to the left by two places. In this process, older bits 6 and 7 of this branch history are discarded. One or more of the shifted bits, such as bits 2-5, are stored directly into register 310. Register 310 receives and stores first bits S[1] and S[0] of a branch signature, which identifies a particular branch whose branch history is being updated. As non-limiting examples, a branch signature could be as simple as the least significant bits of a linear address, or it could be as complicated as (a first linear address portion) XOR (a second linear address portion) XOR (bits representing branch type) XOR (bits representing other attributes of the branch). If a 4 bit branch signature is needed, for example, the 12 least significant bits of a linear address (LINAD) can be XOR'ed with four bits representing branch type, as follows:
LINAD [11:8] XOR
LINAD[7:4] XOR
LINAD[3:0] XOR
TYPE[3:0].

Updating of current global branch history continues with a plurality of XOR gates 330 performing a bitwise XOR function on second bits of the branch signature - such as S[3] and S[2] - and shifted bits of the current global branch history, such as bits 0 and 1. Bits resulting from this performance of bitwise XOR function are stored in register 310, thereby updating the current global branch history stored in register 310.

Global branch history stored in register 310 is passed to a branch predictor 335, an electronic circuit that predicts a likelihood that a branch will be taken, using the current branch history. In an implementation, the branch predictor 335 is a two-level adaptive predictor apparatus that is configured to receive updated current global branch history in its first level. Alternative implementations may include other types of branch predictors.

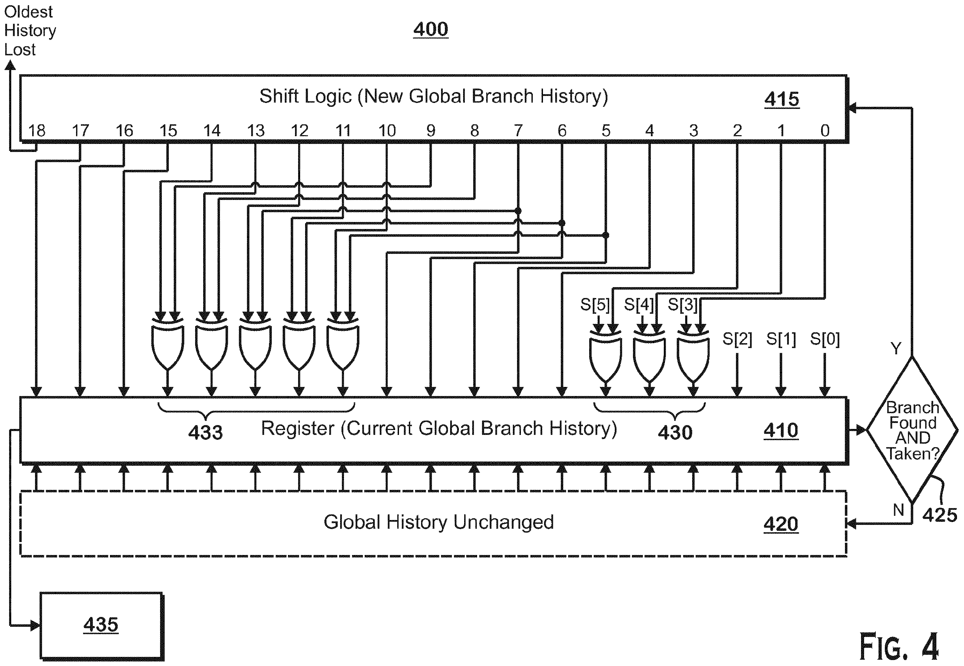

FIG. 4 shows an alternative example implementation of an electronic processing device 400 configured to determine and update global branch history for branch prediction. Specifics of electronic processing device 400 such as exact numbers of bits are not to be considered as limiting. The implementation of FIG. 4 includes compression of branch history information and branch signature information through variable shifting and additional XOR functions.

Similar to the example of FIG. 3, a current global branch history is stored as a bit sequence in a register 410. In FIG. 4, the current global branch history is shown as having 19 bits, but this number is not to be considered limiting.

When a branch is found, a determination is made by decision circuitry 425 whether the branch has been taken or not taken. If the branch has not been taken, the current global history is not changed 420 and is re-stored in register 410. If the branch has been taken, the current global branch history is updated, as in the following example, which is not to be considered limiting.

In the implementation shown in FIG. 4, the updating begins with shift logic 415 shifting bits representing a current global branch history, and storing the shifted bits in register 410. In contrast to FIG. 3, however, one or more of the newest bits of the current global branch history are shifted by a first number of places, and one or more of the oldest bits are shifted by a second number of places, the first number of places and the second number of places being not equal. In particular, the second number of places is less than the first number of places. As shown in FIG. 4, bits 0 through 7 are shifted to the left by three places, while bits 10 through 16 are shifted to the left by one place. One or more of the shifted bits are stored directly into register 410. In the example of FIG. 4, these bits are 3-7, 15, 16, and 17. In this process, oldest bit 18 of this branch history is discarded.

Similar to FIG. 3, register 410 receives and stores first bits S[2], S[1] and S[0] of a branch signature. Similar to FIG. 3, updating of current global branch history continues with a first plurality of XOR gates 430 performing a bitwise XOR function on second bits of the branch signature - S[5], S[4] and S[3] in the example of FIG. 4 - and shifted bits of the current global branch history, bits 0, 1, and 2 in the example of FIG. 4. Bits resulting from this performance of the bitwise XOR function are stored in register 410 as part of the updated current branch history.

In contrast to FIG. 3, the device of FIG. 4 performs a compression using a second plurality of XOR gates 433. The XOR gates 433 are configured to perform a bitwise XOR function between current global branch history bits shifted by the second number of places and newer bits of the current global branch history. Bits resulting from this performance of bitwise XOR function are stored in register 410 to complete updating of current global branch history. In the particular example of FIG. 4, the following XOR functions are performed: 10 XOR 5, 11 XOR 6, 12 XOR 7, 13 XOR 8, and 14 XOR 9.

In an implementation, global branch history stored in register 410 is passed to a branch predictor 435 that predicts a likelihood that a branch will be taken using the current global branch history. In an implementation, the branch predictor 435 is a two-level adaptive predictor apparatus that is configured to receive updated current global branch history in its first level. Alternative implementations may include other types of branch predictors.

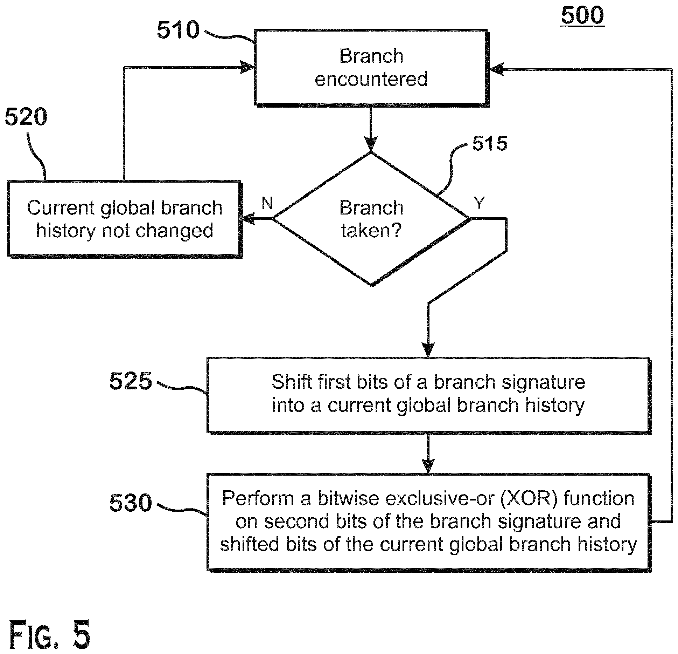

FIG. 5 shows a method 500 of determining global branch history for branch prediction. The exact order of steps shown is not necessarily to be construed as limiting. During execution of code, a branch is encountered (step 510). A determination is made whether or not this branch is taken (step 515). When the branch is not taken, a current global branch history is not changed (step 520) and the method returns to wait for a next encountered branch (step 510).

When the branch is taken, the current global branch history is updated. Updating begins by shifting first bits of a branch signature into a current global branch history (step 525). The shifting includes discarding one or more of the oldest bits in the current global branch history. A bit-wise XOR function is performed on second bits of the branch signature and shifted bits of the current global branch history (step 530). The current global branch history is now updated and stored in a register, as described above. The method returns to wait for a next encountered branch (step 510).

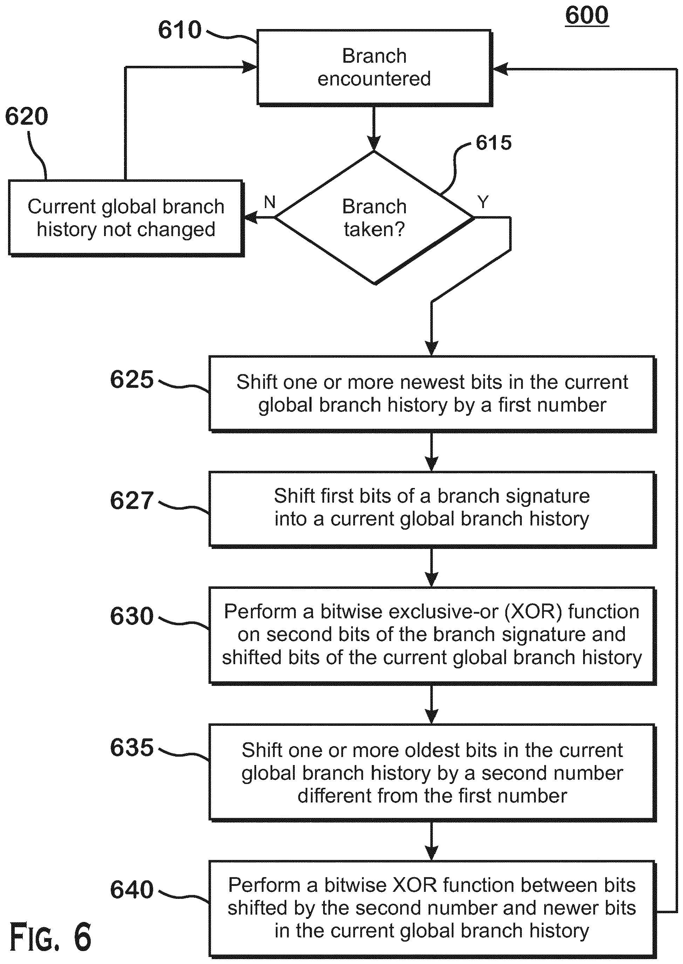

FIG. 6 shows another implementation 600 of a method of determining global branch history for branch prediction. The exact order of steps shown is not necessarily to be construed as limiting. In addition to the method shown in FIG. 5, the implementation shown in FIG. 6 includes compression of branch history information and branch signature information through variable shifting and additional XOR functions. As in FIG. 5, a branch is encountered (step 610) and a determination is made (step 615) whether or not this branch has been taken. If it has not been taken then, as in FIG. 5, the current global branch history is not changed (step 620) and the method returns to wait for the next branch to be encountered (step 610).

When the branch is taken, one or more the newest bits in the current global branch history are shifted by a first number of places (step 625). First bits of a branch signature are shifted into the current global branch history (step 627). An exclusive XOR function is performed on second bits of the branch signature and bits of the current global branch history shifted by the first number of places (step 630).

One or more of the oldest bits in the current global branch history are shifted by a second number of places different from the first number of places (step 635). In a particular implementation, the second number of places is less than the first number of places. As an example, the first number of places is three and the second number of places is one. As a result of the two shifts, one or more of the oldest bits in current global branch history are discarded.

A bitwise XOR function is performed between bits of the current global branch history shifted by the second number of places and newer bits in the current global branch history (step 640). One or more of the shifted bits of the current global branch history become bits of the updated branch history without further processing.

The current global branch history is now updated. In an implementation, the updated global branch history is stored in a register, as described above. The method returns to wait for a next encountered branch (step 610).

It should be understood that many variations are possible based on the disclosure herein. Although features and elements are described above in particular combinations, each feature or element can be used alone without the other features and elements or in various combinations with or without other features and elements.

The methods provided are implemented in a general purpose computer, a processor, or a processor core. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine. Such processors can be manufactured by configuring a manufacturing process using the results of processed hardware description language (HDL) instructions and other intermediary data including netlists (such instructions capable of being stored on a computer readable media). The results of such processing can be maskworks that are then used in a semiconductor manufacturing process to manufacture a processor which implements aspects of the embodiments.

The methods or flow charts provided herein are implemented in a computer program, software, or firmware incorporated in a non-transitory computer-readable storage medium for execution by a general purpose computer or a processor. Examples of non-transitory computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

## Claims

1. A method of determining global branch history for branch prediction, the method comprising:
shifting first bits of a branch signature into lowest order bits of a global branch history register (410) storing current global branch history;
performing a bitwise exclusive-or (XOR) function (430) on second bits of the branch signature and on lowest order bits of the current global branch history to generate third bits for storage into the global branch history register (410), wherein the second bits are distinct from and higher order than the first bits, and wherein the third bits for storage into the global branch history register (410) are stored at bit locations of the global branch history register (410) that are higher order than the lowest order bits of the global branch history register (410) into which the unmodified first bits of the branch signature are shifted;
**characterized in that** the method comprises:
performing a bitwise XOR function (433) on different combinations of bits of the current global branch history to obtain fourth bits for storage into the global branch history register (410), and storing the fourth bits at bit locations of the global branch history register (410) that are higher order than the bit locations in which the third bits are stored,
wherein the different combinations of bits for which the XOR function is performed comprise a first set of bits of the current global branch history and a second, higher order set of bits of the current global branch history; and
storing bits of the current global branch history, that are higher order than the lowest order bits of the current global branch history, into the global branch history register (410) at a location that is higher order than the third bits for storing into the global branch history register (410) and lower order than the fourth bits for storage into the global branch history register (410), the bits of the current global branch history being higher order than the lowest order bits of the current global branch history and lower order than each of the bits of the different combinations of bits from which the fourth bits are obtained.

2. The method of claim 1, wherein the branch signature comprises bits that identify a particular branch whose branch history is being updated.

3. The method of claim 1, further comprising discarding one or more oldest bits in the current global branch history.

4. The method of claim 1, wherein the shifting and the performing of the bitwise XOR functions are executed when a branch identified by the branch signature is taken.

5. The method of claim 1, wherein the current global branch history is not changed when a branch identified by the branch signature is not taken.

6. The method of claim 1, executed when a branch identified by the branch signature is taken.

7. The method of claim 1, wherein the current global branch history is not changed when a branch identified by the branch signature is not taken.

8. A processing device configured to determine and update global branch history for branch prediction, the processing device comprising:
shift logic (415) configured to shift bits representing a current global branch history;
a global branch history register (410) configured to store the current global branch history;
decision circuitry configured to determine whether or not a branch is taken; and
a first plurality of exclusive-or (XOR) gates (430) and a second plurality of XOR gates (433);
wherein the determining and updating of global branch history comprises:
the shift logic (415) shifting bits representing a current global branch history and storing one or more of the shifted bits in the global branch history register (410);
the global branch history register (410) receiving and storing first bits of a branch signature, the branch signature comprising bits that identify a particular branch whose branch history is being updated, the first bits of the branch signature being stored into lowest order bits of the global branch history register (410);
the first plurality of XOR gates (430) performing a bitwise XOR function on second bits of the branch signature and on lowest order bits of the current global branch history to generate third bits for storage into the global branch history register (410), wherein the second bits are distinct from and higher order than the first bits, wherein the third bits for storage into the global branch history register (410) are higher order than the lowest order bits of the global branch history register (410) into which the unmodified first bits of the branch signature are shifted;
storing the third bits for storage into the global branch history register (410) generated by the first plurality of XOR gates (430) into the global branch history register (410) to update the current global branch history;
**characterized in that**:
the second plurality of XOR gates (433) performing a bitwise XOR function on different combinations of bits of the current global branch history to obtain fourth bits for storage into the global branch history register (410), wherein the different combinations of bits for which the XOR function is performed comprise a first set of bits of the current global branch history and a second, higher order set of bits of the current global branch history;
storing the fourth bits at bit locations of the global branch history register (410) that are higher order than the bit locations in which the third bits are stored; and
storing bits of the current global branch history, that are higher order than the lowest order bits of the current global branch history, into the global branch history register (410) at a location that is higher order than the third bits for storing into the global branch history register (410) and lower order than the fourth bits for storage into the global branch history register (410), the bits of the current global branch history being higher order than the lowest order bits of the current global branch history and lower order than each of the bits of the different combinations of bits from which the fourth bits are obtained.

9. The processing device of claim 8, further configured to determine and update global branch history for branch prediction when the decision circuitry determines that a branch identified by the branch signature has been taken.

10. The processing device of claim 8, further configured to not change the current global branch history when the decision circuitry determines that a branch identified by the branch signature is not taken.

11. The processing device of claim 8, further configured to execute compression of branch history information and branch signature information when the decision circuitry determines that a branch identified by the branch signature has been taken.

12. The processing device of claim 8, further configured to not change the current global branch history when the decision circuitry determines that a branch identified by the branch signature is not taken.

13. The processing device of claim 8, further comprising a two-level adaptive predictor apparatus configured to receive the updated current global branch history in a first level.

## Patentansprüche

1. Verfahren zum Bestimmen eines globalen Verzweigungsverlaufs zur Verzweigungsvorhersage, wobei das Verfahren Folgendes umfasst:
Verschieben von ersten Bits einer Verzweigungssignatur in Bits einer niedrigsten Ordnung eines Registers (410) des globalen Verzweigungsverlaufs, das einen momentanen globalen Verzweigungsverlauf speichert;
Durchführen einer bitweisen Exclusive-or(XOR)-Funktion (430) an zweiten Bits der Verzweigungssignatur und an Bits einer niedrigsten Ordnung des momentanen globalen Verzweigungsverlaufs, um dritte Bits zum Speichern in dem Register (410) des globalen Verzweigungsverlaufs zu erzeugen,
wobei die zweiten Bits sich von den ersten Bits unterscheiden und von einer höheren Ordnung als diese sind, und wobei die dritten Bits zum Speichern in das Register (410) des globalen Verzweigungsverlaufs an Bitstandorten des Registers (410) des globalen Verzweigungsverlaufs gespeichert sind, die von einer höheren Ordnung als die Bits der niedrigsten Ordnung des Registers (410) des globalen Verzweigungsverlaufs, in welche die nicht modifizierten ersten Bits der Verzweigungssignatur verschoben werden, sind;
**dadurch gekennzeichnet, dass** das Verfahren Folgendes umfasst:
Durchführen einer bitweisen XOR-Funktion (433) an verschiedenen Kombinationen von Bits des momentanen globalen Verzweigungsverlaufs, um vierte Bits zum Speichern in das Register (410) des globalen Verzweigungsverlaufs zu gewinnen, und Speichern der vierten Bits an Bitstandorten des Registers (410) des globalen Verzweigungsverlaufs, die von einer höheren Ordnung als die Bitstandorte, in welchen die dritten Bits gespeichert sind, sind, wobei die verschiedenen Kombinationen von Bits, für welche die XOR-Funktion durchgeführt wird, einen ersten Satz von Bits des momentanen globalen Verzweigungsverlaufs und einen zweiten Satz von Bits des momentanen globalen Verzweigungsverlaufs von einer höheren Ordnung umfassen; und
Speichern von Bits des momentanen globalen Verzweigungsverlaufs, die von einer höheren Ordnung als die Bits der niedrigsten Ordnung des momentanen globalen Verzweigungsverlaufs sind, in das Register (410) des globalen Verzweigungsverlaufs an einem Standort, der von einer höheren Ordnung als die dritten Bits zum Speichern in dem Register (410) des globalen Verzweigungsverlaufs und von einer niedrigeren Ordnung als die vierten Bits zum Speichern in das Register (410) des globalen Verzweigungsverlaufs ist, wobei die Bits des momentanen globalen Verzweigungsverlaufs von einer höheren Ordnung als die Bits der niedrigsten Ordnung des globalen Verzweigungsverlaufs und von einer niedrigeren Ordnung als jedes der Bits der verschiedenen Kombinationen von Bits, aus welchen die vierten Bits gewonnen werden, sind.

2. Verfahren nach Anspruch 1, wobei die Verzweigungssignatur Bits umfasst, die eine bestimmte Verzweigung identifizieren, deren Verzweigungsverlauf aktualisiert wird.

3. Verfahren nach Anspruch 1, ferner umfassend ein Verwerfen von einem oder mehreren ältesten Bits in dem momentanen globalen Verzweigungsverlauf.

4. Verfahren nach Anspruch 1, wobei das Verschieben und das Durchführen der bitweisen XOR-Funktionen ausgeführt werden, wenn eine Verzweigung, die durch die Verzweigungssignatur identifiziert wird, ausgewählt wird.

5. Verfahren nach Anspruch 1, wobei der momentane globale Verzweigungsverlauf nicht geändert wird, wenn eine Verzweigung, die durch die Verzweigungssignatur identifiziert wird, nicht ausgewählt wird.

6. Verfahren nach Anspruch 1, das ausgeführt wird, wenn eine Verzweigung, die durch die Verzweigungssignatur identifiziert wird, ausgewählt wird.

7. Verfahren nach Anspruch 1, wobei der momentane globale Verzweigungsverlauf nicht geändert wird, wenn eine Verzweigung, die durch die Verzweigungssignatur identifiziert wird, nicht ausgewählt wird.

8. Verarbeitungsvorrichtung, die dazu konfiguriert ist, einen globalen Verzweigungsverlauf zur Verzweigungsvorhersage zu bestimmen und zu aktualisieren, wobei die Verarbeitungsvorrichtung Folgendes umfasst:
eine Verschiebungslogik (415), die dazu konfiguriert ist, Bits, die einen momentanen globalen Verzweigungsverlauf darstellen, zu verschieben;
ein Register (410) des globalen Verzweigungsverlaufs, das dazu konfiguriert ist, den momentanen globalen Verzweigungsverlauf zu speichern;
eine Entscheidungsschaltungsanordnung, die dazu konfiguriert ist, zu bestimmen, ob eine Verzweigung ausgewählt wird oder nicht; und
eine erste Vielzahl von Exclusive-or(XOR)-Gattern (430) und eine zweite Vielzahl von XOR-Gattern (433);
wobei das Bestimmen und Aktualisieren des globalen Verzweigungsverlaufs umfasst, dass:
die Verschiebungslogik (415) Bits, die einen momentanen globalen Verzweigungsverlauf darstellen, verschiebt und eines oder mehrere der verschobenen Bits in dem Register (410) des globalen Verzweigungsverlaufs speichert;
das Register (410) des globalen Verzweigungsverlaufs erste Bits einer Verzweigungssignatur empfängt und speichert, wobei die Verzweigungssignatur Bits umfasst, die eine bestimmte Verzweigung identifizieren, deren Verzweigungsverlauf aktualisiert wird, wobei die ersten Bits der Verzweigungssignatur in Bits einer niedrigsten Ordnung des Registers (410) des globalen Verzweigungsverlaufs gespeichert werden;
die erste Vielzahl von XOR-Gattern (430) eine bitweise XOR-Funktion an zweiten Bits der Verzweigungssignatur und an Bits der niedrigsten Ordnung des momentanen globalen Verzweigungsverlaufs durchführt, um dritte Bits zum Speichern in das Register (410) des globalen Verzweigungsverlaufs zu erzeugen, wobei die zweiten Bits sich von den ersten Bits unterscheiden und von einer höheren Ordnung als diese sind,
wobei die dritten Bits zum Speichern in das Register (410) des globalen Verzweigungsverlaufs von einer höheren Ordnung als die Bits der niedrigsten Ordnung des Registers (410) des globalen Verzweigungsverlaufs, in welche die nicht modifizierten ersten Bits der Verzweigungssignatur verschoben werden, sind;
Speichern der dritten Bits zum Speichern in das Register (410) des globalen Verzweigungsverlaufs, die durch die erste Vielzahl von XOR-Gattern (430) erzeugt wurden, in das Register (410) des globalen Verzweigungsverlaufs, um den momentanen globalen Verzweigungsverlauf zu aktualisieren;
**dadurch gekennzeichnet, dass**
die zweite Vielzahl von XOR-Gattern (433) eine bitweise XOR-Funktion an verschiedenen Kombinationen von Bits des momentanen globalen Verzweigungsverlaufs durchführt, um vierte Bits zum Speichern in das Register (410) des globalen Verzweigungsverlaufs zu gewinnen, wobei die verschiedenen Kombinationen von Bits, für welche die XOR-Funktion durchgeführt wird, einen ersten Satz von Bits des momentanen globalen Verzweigungsverlaufs und einen zweiten Satz von Bits des momentanen globalen Verzweigungsverlaufs von einer höheren Ordnung umfassen;
Speichern der vierten Bits an Bitstandorten des Registers (410) des globalen Verzweigungsverlaufs, die von einer höheren Ordnung als die Bitstandorte, in welchen die dritten Bits gespeichert sind, sind; und
Speichern von Bits des momentanen globalen Verzweigungsverlaufs, die von einer höheren Ordnung als die Bits der niedrigsten Ordnung des momentanen globalen Verzweigungsverlaufs sind, in das Register (410) des globalen Verzweigungsverlaufs an einem Standort, der von einer höheren Ordnung als die dritten Bits zum Speichern in dem Register (410) des globalen Verzweigungsverlaufs und von einer niedrigeren Ordnung als die vierten Bits zum Speichern in das Register (410) des globalen Verzweigungsverlaufs ist, wobei die Bits des momentanen globalen Verzweigungsverlaufs von einer höheren Ordnung als die Bits der niedrigsten Ordnung des momentanen globalen Verzweigungsverlaufs und von einer niedrigeren Ordnung als jedes der Bits der verschiedenen Kombinationen von Bits, aus welchen die vierten Bits gewonnen werden, sind.

9. Verarbeitungsvorrichtung nach Anspruch 8, die ferner dazu konfiguriert ist, einen globalen Verzweigungsverlauf zur Verzweigungsvorhersage zu bestimmen und zu aktualisieren, wenn die Entscheidungsschaltungsanordnung bestimmt, dass eine Verzweigung, die durch die Verzweigungssignatur identifiziert ist, ausgewählt worden ist.

10. Verarbeitungsvorrichtung nach Anspruch 8, die ferner dazu konfiguriert ist, den momentanen globalen Verzweigungsverlauf nicht zu ändern, wenn die Entscheidungsschaltungsanordnung bestimmt, dass eine Verzweigung, die durch die Verzweigungssignatur identifiziert ist, nicht ausgewählt wird.

11. Verarbeitungsvorrichtung nach Anspruch 8, die ferner dazu konfiguriert ist, eine Komprimierung von Verzweigungsverlaufsinformationen und Verzweigungssignaturinformationen durchzuführen, wenn die Entscheidungsschaltungsanordnung bestimmt, dass eine Verzweigung, die durch die Verzweigungssignatur identifiziert ist, ausgewählt worden ist.

12. Verarbeitungsvorrichtung nach Anspruch 8, die ferner dazu konfiguriert ist, den momentanen globalen Verzweigungsverlauf nicht zu ändern, wenn die Entscheidungsschaltungsanordnung bestimmt, dass eine Verzweigung, die durch die Verzweigungssignatur identifiziert ist, nicht ausgewählt wird.

13. Verarbeitungsvorrichtung nach Anspruch 8, ferner umfassend eine zweistufige adaptive Vorhersagevorrichtung, die dazu konfiguriert ist, den aktualisierten momentanen globalen Verzweigungsverlauf in einer ersten Stufe zu empfangen.

## Revendications

1. Procédé de détermination d'historique d'embranchement global pour une prédiction d'embranchement, le procédé comprenant :
le décalage de premiers bits d'une signature d'embranchement en bits d'ordre inférieur d'un registre d'historique d'embranchement global (410) stockant l'historique d'embranchement global actuel,
l'exécution d'une fonction au niveau du bit ou exclusif (XOR) (430) sur les deuxièmes bits de la signature d'embranchement et sur les bits d'ordre inférieur de l'historique d'embranchement global actuel pour générer des troisièmes bits pour un stockage dans le registre d'historique d'embranchement global (410), dans lequel les deuxièmes bits sont distincts des premiers bits et
d'ordre supérieur à ceux-ci, et dans lequel les troisièmes bits pour un stockage dans le registre d'historique d'embranchement global (410) sont stockés à des emplacements de bits du registre d'historique d'embranchement global (410) qui sont d'ordre supérieur aux bits d'ordre inférieur du registre d'historique d'embranchement global (410) dans lequel les premiers bits non modifiés de la signature d'embranchement sont décalés ;
**caractérisé en ce que** le procédé comprend :
l'exécution d'une fonction XOR (433) au niveau du bit sur différentes combinaisons de bits de l'historique d'embranchement global actuel pour obtenir des quatrièmes bits pour un stockage dans le registre d'historique d'embranchement global (410) et le stockage des quatrièmes bits à des emplacements de bits du registre d'historique d'embranchement global (410) qui sont d'ordre supérieur aux emplacements de bits dans lesquels les troisièmes bits sont stockés, dans lequel les différentes combinaisons de bits pour lesquelles la fonction XOR est exécutée comprennent un premier ensemble de bits de l'historique d'embranchement global actuel et un second ensemble de bits d'ordre supérieur de l'historique d'embranchement global actuel ; et
le stockage de bits de l'historique d'embranchement global actuel, qui sont d'ordre supérieur aux bits d'ordre inférieur de l'historique d'embranchement global actuel, dans le registre d'historique d'embranchement global (410) à un emplacement qui est d'ordre supérieur aux troisièmes bits pour un stockage dans le registre d'historique d'embranchement global (410) et d'ordre inférieur aux quatrièmes bits pour un stockage dans le registre d'historique d'embranchement global (410), les bits de l'historique d'embranchement global actuel étant d'ordre supérieur aux bits d'ordre inférieur de l'historique d'embranchement global et d'ordre inférieur à chacun des bits des différentes combinaisons de bits à partir desquelles les quatrièmes bits sont obtenus.

2. Procédé selon la revendication 1, dans lequel la signature d'embranchement comprend des bits qui identifient un branchement particulier dont l'historique d'embranchement est en cours de mise à jour.

3. Procédé selon la revendication 1, comprenant en outre l'élimination d'un ou de plusieurs bits les plus anciens de l'historique d'embranchement global actuel.

4. Procédé selon la revendication 1, dans lequel le décalage et l'exécution des fonctions XOR au niveau du bit sont exécutés lorsqu'un embranchement identifié par la signature d'embranchement est pris.

5. Procédé selon la revendication 1, dans lequel l'historique d'embranchement global actuel n'est pas modifié lorsqu'un branchement identifié par la signature d'embranchement n'est pas pris.

6. Procédé selon la revendication 1, exécuté lorsqu'un embranchement identifié par la signature d'embranchement est pris.

7. Procédé selon la revendication 1, dans lequel l'historique d'embranchement global actuel n'est pas modifié lorsqu'un embranchement identifié par la signature d'embranchement n'est pas pris.

8. Dispositif de traitement configuré pour déterminer et mettre à jour l'historique d'embranchement global pour une prédiction d'embranchement, le dispositif de traitement comprenant :
une logique de décalage (415) configurée pour décaler des bits représentant un historique d'embranchement global actuel ;
un registre d'historique d'embranchement global (410) configuré pour stocker l'historique d'embranchement global actuel ;
un circuit de décision configuré pour déterminer si un branchement est pris ou non; et
une première pluralité de portes ou exclusif (XOR) (430) et une seconde pluralité de portes XOR (433) ;
dans lequel la détermination et la mise à jour de l'historique d'embranchement global comprennent :
la logique de décalage (415) décalant les bits représentant un historique d'embranchement global actuel et stockant un ou plusieurs des bits décalés dans le registre d'historique d'embranchement global (410) ;
le registre d'historique d'embranchement global (410) recevant et stockant les premiers bits d'une signature d'embranchement, la signature d'embranchement comprenant des bits qui identifient un embranchement particulier dont l'historique d'embranchement est en cours de mise à jour, les premiers bits de la signature d'embranchement étant stockés dans les bits d'ordre inférieur du registre d'historique d'embranchement global (410),
la première pluralité de portes XOR (430) exécutant une fonction XOR au niveau du bit sur les deuxièmes bits de la signature d'embranchement et sur les bits d'ordre inférieur de l'historique d'embranchement global actuel afin de générer des troisièmes bits pour un stockage dans le registre d'historique d'embranchement global (410), dans lequel les deuxièmes bits sont distincts des premiers bits et d'ordre supérieur à ceux-ci, dans lequel les troisièmes bits pour un stockage dans le registre d'historique d'embranchement global (410) sont d'ordre supérieur aux bits d'ordre inférieur du registre d'historique d'embranchement global (410) dans lequel les premiers bits non modifiés de la signature d'embranchement sont décalés ;
le stockage des troisièmes bits pour un stockage dans le registre d'historique d'embranchement global (410) générés par la première pluralité de portes XOR (430) dans le registre d'historique d'embranchement global (410) pour mettre à jour l'historique d'embranchement global actuel ;
**caractérisé en ce que** :
la seconde pluralité de portes XOR (433) exécutant une fonction XOR au niveau du bit sur différentes combinaisons de bits de l'historique d'embranchement global actuel pour obtenir des quatrièmes bits pour un stockage dans le registre d'historique d'embranchement global (410), dans lequel les différentes combinaisons de bits pour lesquelles la fonction XOR est exécutée comprennent un premier ensemble de bits de l'historique d'embranchement global actuel et un second ensemble de bits d'ordre supérieur de l'historique d'embranchement global actuel ;
le stockage des quatrièmes bits à des emplacements de bits du registre d'historique d'embranchement global (410) qui sont d'ordre supérieur aux emplacements de bits dans lesquels les troisièmes bits sont stockés ; et
le stockage des bits de l'historique d'embranchement global actuel, qui sont d'ordre supérieur aux bits d'ordre inférieur de l'historique d'embranchement global actuel, dans le registre d'historique d'embranchement global (410) à un emplacement qui est d'ordre supérieur aux troisièmes bits pour un stockage dans le registre d'historique d'embranchement global (410) et d'ordre inférieur aux quatrièmes bits pour un stockage dans le registre d'historique d'embranchement global (410), les bits de l'historique d'embranchement global actuel étant d'ordre supérieur aux bits d'ordre inférieur de l'historique d'embranchement global actuel et d'ordre inférieur à chacun des bits des différentes combinaisons de bits à partir desquelles les quatrièmes bits sont obtenus.

9. Dispositif de traitement selon la revendication 8, configuré en outre pour déterminer et mettre à jour l'historique d'embranchement global pour une prédiction d'embranchement lorsque le circuit de décision détermine qu'un embranchement identifié par la signature d'embranchement a été pris.

10. Dispositif de traitement selon la revendication 8, configuré en outre pour ne pas modifier l'historique d'embranchement global actuel lorsque le circuit de décision détermine qu'un embranchement identifié par la signature d'embranchement n'est pas pris.

11. Dispositif de traitement selon la revendication 8, configuré en outre pour exécuter la compression des informations d'historique d'embranchement et des informations de signature d'embranchement lorsque le circuit de décision détermine qu'un embranchement identifié par la signature d'embranchement a été pris.

12. Dispositif de traitement selon la revendication 8, configuré en outre pour ne pas modifier l'historique d'embranchement global actuel lorsque le circuit de décision détermine qu'un embranchement identifié par la signature d'embranchement n'est pas pris.

13. Dispositif de traitement selon la revendication 8, comprenant en outre un appareil de prédiction adaptatif à deux niveaux configuré pour recevoir l'historique d'embranchement global actuel mis à jour dans un premier niveau.
